# EUROPEAN PATENT APPLICATION

(11) **EP 2 461 031 A2**
(43) Date of publication of application: **06.06.2012**
(21) Application number: 11181738.3
(22) Date of filing: 19.09.2011
(51) Int. Cl.: F03D 11/04

(54) **Technology for combined offshore floating wind power generation**

(30) Priority: 01.12.2010 CN 201010568050
(71) Applicant: Changxing Wind Power Technology Co., Ltd, Shandong (CN)
(72) Inventor: Zhu, Yu Guo, Zouping County Shandong (CN)
(74) Representative: Sanz-Bermell Martinez, Alejandro

(57) **Abstract**

A technology for combined offshore floating wind power generation, comprises a base platform and a power generation device mounted on the platform, characterized in that the platform is in the shape of a regular octagon, each corner of the regular octagon is provided with an independent corner floating unit, the center of the regular octagon is provided with an independent central floating unit, a floating support unit is connected between each corner floating unit and the central floating unit and between each pair of adjacent corner floating units such that a platform frame is formed, a deck is mounted on the platform frame, a plurality of independent chambers in the floating support unit, and the power generation device at least comprises a wind power system above the central floating unit and the corner floating units. This invention solves the problem of high costs and complicated in construction, and is rarely affected by the depth of the water and the distance from shore, and also is high in the efficiency of power generation.

## Description

### FIELD OF THE INVENTION

The present invention relates to the field of comprehensive power plant, and in particular to the technology for combined offshore floating wind power generation by using wind energy, solar energy, tidal energy, etc.

### BACKGROUND OF THE INVENTION

Wind power generation is a green power technology that is rapidly developed. While onshore wind farm is rapidly developed, it is noted that the onshore wind farm is limited by some factors such as covering a large area, noise pollution. Owing to the feasibility of technology today and the rich wind energy resource on the sea, there will be a rapid development of the wind power generation on the sea.

At the present, there are two types of supporting structures for the offshore wind turbine, i. e. the bottom-supported fixed platform and the suspended type supporting unit.

The bottom-supported fixed platform has three types of bases, i.e. a caisson gravity, a single pile, and a tripod assembly. The caisson gravity mainly relies on the weight of the caisson gravity itself to enable the wind power generator unit to stand on the sea, the caisson is established by reinforced concrete on the wharf near the wind power plant and then floats to its mounting position and filed with sand and stones, and finally sunk to the bottom of the sea. The single pile is constructed by a steel pile with a diameter of 3-4.5m. The steel pile is mounted to a position of 10-25m below the seabed, which depends on the type of the sea floor. The wind-power tower is fixed by the single pile extending into the seabed. The tripod assembly consists of steel tubes which have low cost and weight. There are steel brackets below the steel piles of the wind-power tower to withstand the weight of the wind-power tower, and the steel brackets are embedded to a position of 10-20m below the seabed.

The fixed platform has detects that the construction cost is high, the construction is complicated, and it is greatly affected by the depth of the water.

With development of technology, the suspended type supporting unit is developed, and it mainly includes two types of supporting, i.e. pontoon supporting and semi-submerged supporting. The pontoon basis is fixed to the seabed by eight cables. The wind-power tower is fixed to the pontoon by bolt. In the semi-submerged supporting, the main supporting structure is submerged under the water and anchored to the seabed.

How to reduce the additional cost due to the offshore arrangement of the wind turbine is a main challenging aspect in the development of offshore wind power generation. The main costs are induced by the submarine cables and the bases of the wind turbine since they are greatly affected by the depth of the water and the distance from shore and it is only slightly affected by the size of the wind turbine. Therefore, how to improve the efficiency of power generation under the same costs of the submarine cables and the bases is the main problem in the art.

### SUMMARY OF THE INVENTION

The object of the present invention is to provide a technology for combined offshore floating wind power generation, which solves the problem of high costs and complicated in construction, and is rarely affected by the depth of the water and the distance from shore, and also is high in the efficiency of power generation.

To achieve the above object, the technical solution of the invention is as follows:

The technology for combined offshore floating wind power generation, comprises a base platform and a power generation device mounted on the platform, wherein the platform is in the shape of a regular octagon, each corner of the regular octagon is provided with an independent corner floating unit, the center of the regular octagon is provided with an independent central floating unit, a floating support unit is connected between each corner floating unit and the central floating unit and between each pair of adjacent corner floating units such that a platform frame is formed, a deck is mounted on the platform frame, a plurality of independent chambers in the floating support unit, and the power generation device at least comprises a wind power system above the central floating unit and the corner floating units.

Preferably, a water inlet and discharge chamber is further provided in each corner floating unit such that the level degree can be adjusted by discharging water out of or inletting water into the water inlet and discharge chamber.

Preferably, a solar power generation system is provided at least on the central supporting barrel of the wind power system so as to improve the power generation property.

Preferably, a power generation device of wave energy and/or tidal energy is further mounted on the platform frame.

### Advantages of the Invention

1. The platform is floated offshore, which is environment-protected, saves land space, and reduces the cost for mounting and maintaining the power generation device. It is not necessary to lay the foundations and operate under water, especially under the deep sea. The platform belongs to the combined type, and is easy for construction and assembling. During the assembling, the platform can be assembled in the simple "harbor", and the degree of construction and assembling difficulty is greatly reduced since the water inlet and discharge chamber is provided in each corner floating unit such that the level degree can be adjusted by discharging water out of or inletting water into the water inlet and discharge chamber.
2. Comparing with the onshore wind power generation, the property is stable, the cost for maintenance is slow, the lifetime is long, and the efficiency of power generation is high. The entire platform has nine 2MW wind power generator sets (18MW). According to the situation of the sea, the power generation device of wave energy and the solar panel power generator sets can be further provided, whereby the capacity of power generation is greatly improved. With the development, it can also be realized to produce hydrogen fuel via brine electrolysis. The remaining space in the platform can also be utilized for other purposes.
3. The platform is in the shape of a regular octagon, and nine independent floating units, and thus nine sets of wind power systems are integrated, the input-output ratio is more suitable.

### BRIEF DESCRIPTION OF THE DRAWINGS

Fig. 1 is a schematic plan view of the invention;
Fig. 2 is the left view of Fig. 1.

1. wind power system; 2. corner floating unit; 3. central floating unit; 4. peripheral floating support unit; 5. radial floating support unit; 6. supporting barrel of the wind power system; 7. solar power generation system; 8. sea water.

### DETAILED DESCRIPTION OF THE PREFERRED EMBODIMENTS

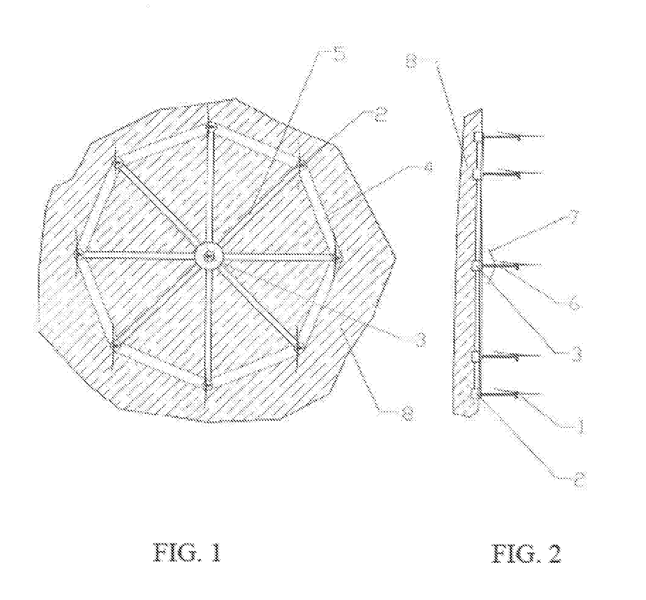

Referring to Figs. 1 and 2, the technology for combined offshore floating wind power generation comprises a base platform and a power generation device mounted on the platform. The base platform is floated on the sea water 8 to support the power generation device and to provide the relevant area for the movement of workers or other relevant people. The power generation device can be one or more selected from the power generation devices of wind energy, solar energy, wave energy or tidal energy.

The platform is in the shape of a regular octagon, each corner of the regular octagon is provided with an independent corner floating unit, the center of the regular octagon is provided with an independent central floating unit 3, a floating support unit is connected between each corner floating unit 2 and the central floating unit and between each pair of adjacent corner floating units such that a platform frame is formed, a deck is mounted on the platform frame. The floating support unit includes the peripheral floating support unit 4 and the radial floating support unit 5, and there are eight peripheral floating support units 4 and eight radial floating support units 5, and they can be in the same or different structure. A plurality of independent chambers in the floating support unit, and these chambers provide enough buoyancy, and improve the safety of the platform.

The floating units can be in the form of pontoon, or other floating objects with similar function.

Wind power systems 1 are provided above the central floating unit 3 and above the corner floating units 2, and fixed to each floating unit via bolt. A water inlet and discharge chamber is provided in each corner floating unit such that the level degree can be adjusted by discharging water out of or inletting water into the water inlet and discharge chamber

A solar power generation system 7 is provided on the central supporting barrel 6 of the wind power system so as to improve the power generation property. The size of the solar power generation system should not affect the stability of the platform. A power generation device of wave energy and/or tidal energy is further mounted on the platform frame. These power generation devices are available in the prior art, and only the base platform is changed to that of the present invention.

The power generation systems are integrated, and the power is transmitted out of the platform via submarine cable or cable on the bracket over the sea.

The entire platform has nine 2MW wind power generator sets (18MW). According to the situation of the sea, the power generation device of wave energy and the solar panel power generator sets can be further provided, whereby the capacity of power generation is greatly improved. With the development, it can also be realized to produce hydrogen fuel via brine electrolysis. The remaining space in the platform can also be utilized for other purposes such as travel purpose, entertainment purpose.

The platform belongs to the combined type, and is easy for construction and assembling. During the assembling, the platform can be assembled in the simple "harbor", and after assembling, it can be drawn to the predetermined sea area.

## Claims

1. A technology for combined offshore floating wind power generation, comprising a base platform and a power generation device mounted on the platform, **characterized in that** the platform is in the shape of a regular octagon, each corner of the regular octagon provided with an independent corner floating unit, the center of the regular octagon provided with an independent central floating unit, a floating support unit connected between each corner floating unit and the central floating unit and between each pair of adjacent corner floating units such that a platform frame is formed, a deck mounted on the platform frame, a plurality of independent chambers in the floating support unit, and the power generation device at least comprising a wind power system above the central floating unit and the corner floating units.

2. The technology for combined offshore floating wind power generation of claim 1, **characterized in that** a water inlet and discharge chamber is further provided in each corner floating unit.

3. The technology for combined offshore floating wind power generation of claim 1 or 2, **characterized in that** a solar power generation system is provided at least on the central supporting barrel of the wind power system.

4. The technology for combined offshore floating wind power generation of claim 1, **characterized in that** a power generation device of wave energy and/or tidal energy is further mounted on the platform frame.
